# EUROPÄISCHE PATENTANMELDUNG

(11) **EP 1 059 247 A1**
(43) Veröffentlichungstag der Anmeldung: **13.12.2000**
(21) Anmeldenummer: 00112264.7
(22) Anmeldetag: 07.06.2000
(51) Int. Cl.: B65G 9/00

(54) **Fördermittel für eine Hängefördereinrichtung**

(30) Priorität: 08.06.1999 DE 29909959 U
(71) Anmelder: WF Logistik GmbH, 86899 Landsberg (DE)
(72) Erfinder: Philippin, Holger, 82194 Gröbenzell (DE)
(74) Vertreter: Tiesmeyer, Johannes, Dr.

(57) **Zusammenfassung**

Es wird ein Fördermittel für eine Hängefördereinrichtung angegeben, welches zwei an einer Schiene (5) hängend bewegbare Rollenlaufwerke (3) und eine die Rollenlaufwerke (3) verbindende Tragstange (15) für zu transportierendes Fördergut aufweist. Das Fördermittel ist dadurch gekennzeichnet, daß die Tragstange (15) bedarfsweise lösbar aneinander angefügte Längenabschnitte (15₁, 15₂) aufweist.

## Beschreibung

Die Erfindung betrifft ein Fördermittel für eine Hängefördereinrichtung, welches zwei an einer Schiene hängend bewegbare Rollenlaufwerke und eine die Rollenlaufwerke verbindende Tragstange für zu transportierendes Fördergut aufweist.

Ein Fördermittel der vorstehend genannten Art ist beispielsweise in der EP 0 516 969 A1 beschrieben. Das Fördermittel dient insbesondere dem Transport von Kleidungsstücken an Kleiderbügeln, die an der Tragstange des Fördermittels anzuhängen sind. Jedes Rollenlaufwerk weist einen V-förmigen Bügel auf, welcher an seinen beiden abstehenden, freien Enden jeweils eine drehbar gelagerte Laufrolle trägt. Im Förderbetrieb stützt sich jeder Bügel mit seinen Laufrollen an äußeren Schrägflächen einer ein Satteldachprofil aufweisenden Führungsschiene ab, so daß der Bügel mit seinem Scheitel nach unten hängt. Die Tragstange ist an ihren beiden Stirnenden über eine Gelenkanordnung gelenkig mit den Bügeln der Rollenlaufwerkeverbunden, so daß das Fördermittel Kurvenfahrten und/oder Steigungs- bzw. Neigungsfahrten durchführen kann. Bei der Tragstange des bekannten Fördermittels handelt es sich um ein Kunststoffteil, welches aus zwei Kunststoff-Halbschalen zusammengesetzt ist, deren Verbindungsnaht über die gesamte Länge der Tragstange verläuft. Die Tragstange kann einen Hohlraum zur Aufnahme eines Verstärkungsstabes oder -kernes aufweisen. Die Tragstangen-Halbschalen nach der EP 0 516 969 A1 sind in den tatsächlich realisierten Ausführungsformen über die gesamte Länge miteinander verklebt, wobei sowohl Elemente der Gelenkverbindung zu den Rollenlaufwerken als auch etwaige innere Verstärkungsstäbe so an der Tragstange festgelegt sind, daß sie ohne Zerstörung der Tragstange nicht entfernt werden können. Eine Reparatur einer beispielsweise nur lokal beschädigten Tragstange ist bei dieser bekannten Konstruktion normalerweise nicht möglich.

Der vorliegenden Erfindung liegt die Aufgabe zugrunde, ein Fördermittel der eingangs genannten Art reparaturfreundlicher und hinsichtlich unterschiedlicher Einsatzbereiche flexibler auszugestalten.

Ausgehend von einem Fördermittel mit den Merkmalen des Oberbegriffs des Anspruchs 1 wird diese Aufgabe erfindungsgemäß dadurch gelöst, daß die Tragstange bedarfsweise lösbar aneinander angefügte Längenabschnitte aufweist. Die Tragstange nach der Erfindung kann somit insgesamt auf einfache Weise modular aufgebaut sein. Im Falle einer lokalen Beschädigung kann das beschädigte Modul in reparaturfreundlicher Weise durch ein Austauschmodul ersetzt werden. Je nach Anzahl der aneinander angefügten Längenabschnitte ergeben sich unterschiedlich lange Tragstangen, so daß Fördermittel nach der Erfindung verschiedenen Förderanforderungen angepaßt werden können.

Vorzugsweise handelt es sich bei den Längenabschnitten um Kunststoffteile, insbesondere Kunststoffhohlteile, die gemäß einer bevorzugten Ausführungsform der Erfindung als Steckverbindungselemente ausgebildet sind, die nach Zusammenstecken eine selbststabilisierende Tragstangeneinheit bilden. Vorzugsweise sind die Längenabschnitte an denjenigen Enden, an denen sie aneinander angefügt sind, durch Verriegelungsmittel, insbesondere Rastverriegelungsmittel oder Schnappverschlußmittel wahlweise lösbar aneinander fixiert.

Falls größere mechanische Stabilität der Tragstange erforderlich sein sollte, so wird vorgeschlagen, daß die Längenabschnitte von einem sich in Tragstangenlängsrichtung erstreckenden Kern zur mechanischen Stabilisierung der Tragstange durchsetzt sind. Bei diesen Kernen kann es sich beispielsweise um Verstärkungsstäbe aus Metall handeln. Solche Verstärkungsstäbe können in verschiedenen Längen bereit gehalten werden, so daß für jede in Frage kommende Tragstangenlänge ein entsprechend angepaßter Verstärkungskern zur Verfügung steht.

Gemäß einer Ausgestaltung der Erfindung sind die beiden endständigen Längenabschnitte der Tragstange gelenkig mit einem jeweiligen Rollenlaufwerk verbunden. Es können hier Gelenkverbindungen verwendet werden, wie sie beispielsweise aus der EP 0 516 969 A1 bekannt sind.

Unter einem weiteren Gesichtspunkt der Erfindung wird ein Fördermittel nach dem Oberbegriff des Anspruchs 1 vorgeschlagen, bei dem die Tragstange wahlweise in ihrer Länge verstellbar ist. In bevorzugter Ausgestaltung des letztgenannten Aspekts der Erfindung weist die Tragstange wenigstens zwei zur Längenverstellung teleskopisch auseinanderziehbare bzw. zusammmenschiebbare Tragstangenlängenabschnitte auf. Vorzugsweise sind die Tragstangenlängenabschnitte in jeder beliebigen Teleskopstellung fixierbar.

Aufgrund der Längenverstellbarkeit der Tragstange kann die Gesamtlänge des Fördermittels nach Bedarf jeweils eingestellt werden, so daß insgesamt eine Optimierung des von den Fördermitteln genutzten Platzes in Schienenlängsrichtung auf der Laufschiene möglich ist.

Gemäß der vorliegenden Erfindung kann auch die kontinuierlich längenverstellbare Tragstange modular aus mehreren Längenabschnitten aufgebaut sein.

Ausführungsbeispiele der Erfindung werden im folgenden unter Bezugnahme auf die Figuren näher erläutert.
- Fig. 1: zeigt eine Seitenansicht eines Fördermittels nach der Erfindung in Förderanordnung an einer gestrichelt angedeuteten Laufschiene.
- Fig. 2: zeigt eine Vorderansicht des Fördermittels nach Fig. 1.
- Fig. 3: zeigt das Fördermittel nach Fig. 1 mit einem zusätzlichen Längenabschnitt der Tragstange.
- Fig. 4: zeigt das Fördermittel gemäß Fig. 3 mit mehreren einseitig daran angehängten Fördermitteln in Lagerposition.
- Fig. 5: zeigt ein weiteres Fördermittel nach der Erfindung

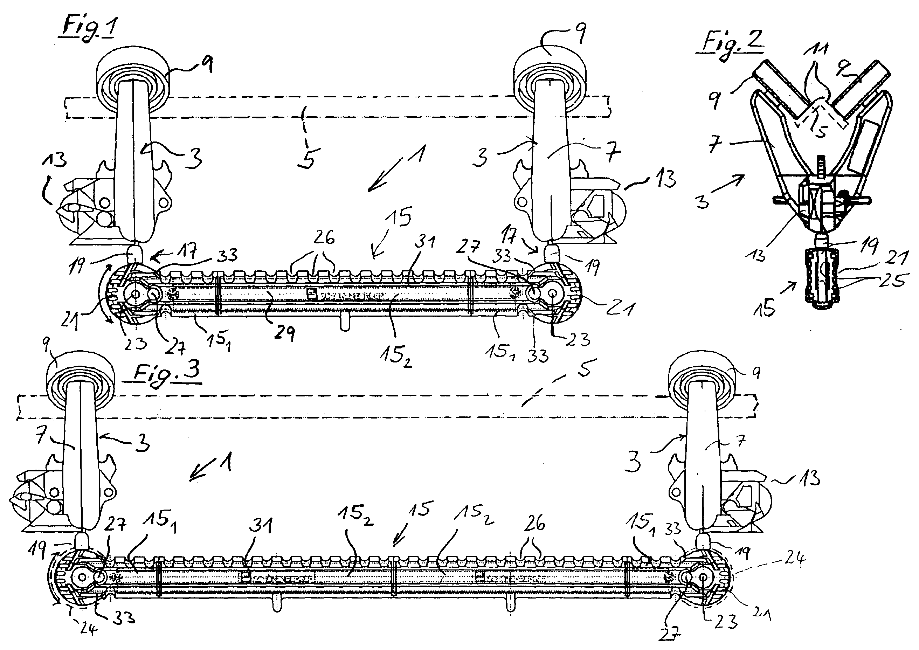

Gemäß Fig. 1 umfaßt das Fördermittel 1 zwei Rollenlaufwerke 3, die in der in den Fig. 1 und 2 gezeigten Förderposition des Fördermittels 1 an einer Laufschiene 5 hängend bewegbar sind. Jedes Laufwerk 3 hat einen Bügel 7, der an seinen beiden abstehenden freien Enden jeweils eine Laufrolle 9 aufweist. Wie insbesondere aus Fig. 2 zu ersehen ist, sind die Laufrollen 9 so orientiert, daß sie auf den äußeren Schrägflächen 11 der Laufschiene 5 abrollen können, wobei der Scheitel des Bügels unterhalb der Laufschiene 5 hängt.

Jedes der beiden Rollenlaufwerke 3 weist am Bügel 7 einen Kupplungsmechanismus 13 auf. Die Kupplungsmechanismen 13 erlauben das Aneinanderkoppeln mehrerer Fördermittel 1 zu einem Fördermittelzug.

An den unteren Scheitelenden der Rollenlaufwerke 3 ist eine Tragstange 15 über eine jeweilige Gelenkanordnung 17 gelenkig angebracht, so daß das Fördermittel 1 sowohl Kurvenfahrten als auch Steigungs- bzw. Neigungsfahrten durchführen kann. Die Gelenkanordnung 17 mit Gelenkstift 19 funktioniert prinzipiell wie die Gelenkanordnung des in EP 0 516 969 A1 beschriebenen Fördermittels nach dem Stand der Technik.

Erfindungsgemäß ist die Tragstange 15 des Fördermittels 1 modular aus mehreren Tragstangenlängenabschnitten 15₁, 15₂ zusammengesetzt, bei denen es sich im Beispielsfall um Steckverbindungselemente handelt. In einem in Längsrichtung verlaufenden Hohlraum der Tragstange 15 ist bei dem gezeigten Ausführungsbeispiel eine (nicht dargestellte) Verstärkungsstange als mechanisch stabilisierender Kern vorgesehen, die an ihren entgegengesetzten Längsenden wahlweise lösbar mit den endständigen Tragstangenlängenabschnitten 15₁ verbunden ist.

Fig. 3 zeigt das Fördermittel 1 aus Fig. 1 mit einem zusätzlichen Tragstangenlängenabschnitt 15₂. Eine entsprechend verlängerte Verstärkungsstange ist bei der Anordnung nach Fig. 3 bedarfsweise vorzusehen.

Wie bereits erwähnt, läßt sich die Erfindung in einer bevorzugten Ausgestaltung auch unter Verzicht auf ein Verstärkungsgestänge realisieren, wenn die Steckverbindungselemente mit entsprechend stabilen Verriegelungsmitteln, beispielsweise wahlweise lösbaren Schnappverschlußmitteln, ausgestattet sind.

Selbstverständlich kann durch Hinzufügen weiterer Tragstangenlängenabschnitte 15₂ das in Fig. 3 gezeigte Fördermittel nochmals verlängert werden.

Die endständigen Tragstangenlängenabschnitte 15₁ weisen Lagerschalen 21 für den Schwenkstift 19 auf, welcher über den bei 23 angedeuteten Schwenkzapfen mit der Tragstange 15 gelenkig verbunden ist. Der Schlitz 25 in dem jeweiligen endständigen Längenabschnitt 15₁ ermöglicht Relativ-Schwenkbewegungen zwischen dem Schwenkstift 19 und dem betreffenden Tragstangenlängenabschnitt 15₁. Gemäß einer Variante des Tragstangenlängenabschnitts 15₁ ist in dem Schlitz 25 der Lagerschalen 21 eine um die Achse 23 drehbar gelagerte Scheibe aus einem elastisch stoßdämpfenden Material aufgenommen, die mit ihrem Umfang über die Randkontur der Lagerschalen 21 in der in Fig. 3 bei 24 angedeuteten Weise hinaus nach außen radial vorsteht. Im Falle eines Stoßes auf die Lagerschalen, etwa bei einem Herabfallen des Fördermittels 1 auf den Boden, dient die Scheibe 24 dazu, den Stoß elastisch aufzunehmen, um die Lagerschalen 21 zu schützen. Selbstverständlich können noch weitere stoßdämpfende Elemente an dem Fördergutträger vorgesehen sein.

Vorzugsweise ist der Schwenkzapfen 23 bedarfsweise entfernbar an dem Tragstangenlängenabschnitt 15₁ befestigt, so daß der Tragstangenlängenabschnitt 15₁ vom Schwenkstift 19 gelöst werden kann. Auf diese Weise kann dann leicht ein etwaig beschädigter endständiger Tragstangenlängenabschnitt 15₁ am betreffenden Rollenlaufwerk 3 ausgetauscht werden.

Bei dem gezeigten Ausführungsbeispiel weist die Tragstange 15 an ihrer Oberseite eine Riffelung mit Quernuten 26 auf, die dazu verwendet werden können, Trägerbügel von zu fördernden Gegenständen, beispielsweise Kleiderbügel von zu fördernden Kleidungsstücken, aufzunehmen und gegen Verrutschen in Tragstangenlängsrichtung zu sichern.

Bei 27 sind in den Fig. 1 und 3 quer zur Tragstangenlängsrichtung verlaufende Löcher in den Tragstangenlängenabschnitten 15₁ erkennbar. Diese bohrungsartigen Löcher 27 in den Endstücken 15₁ dienen zum Einhängen sogenannter Einhängebügel. Bei diesen jeweils paarweise vorzusehenden Einhängebügeln handelt es sich um Stangen, die mit einem oberen Hakenabschnitt in die Löcher 27 eingehängt werden können und die eine oder mehrere weitere Tragstangen zwischen sich halten können, so daß eine mehrstöckige Tragstangenanordnung aus parallel zueinander verlaufenden und übereinander angeordneten Tragstangen vorliegt.

Gegenüber einer Konstruktion nach dem Stand der Technik, gemäß der solche Einhängebügel mit ihrem Hakenende die oberste Tragstange am Fördermittel übergreifen, bietet die in den Figuren 1 und 3 gezeigte Lösung der Einhängebügelbefestigung mittels der Löcher 27 den Vorteil, daß die Gefahr der unbeabsichtigten Aushebelung der Einhängebügel wesentlich herabgesetzt ist.

Die Tragstangenlängenabschnitte 15₂ weisen seitlich äußere Seitenflächen 29 auf. Vorzugsweise befindet sich über die gesamte Länge der Tragstange 15 hinweg keine über die Seitenflächen 29 hinaus nach außen abstehende Störkontur im Verlauf bzw. in Höhe dieser Seitenflächen 29. Das Fehlen solcher Störkonturen erleichtert das automatische Entladen der Tragstangen mittels einer Aushebelstange.

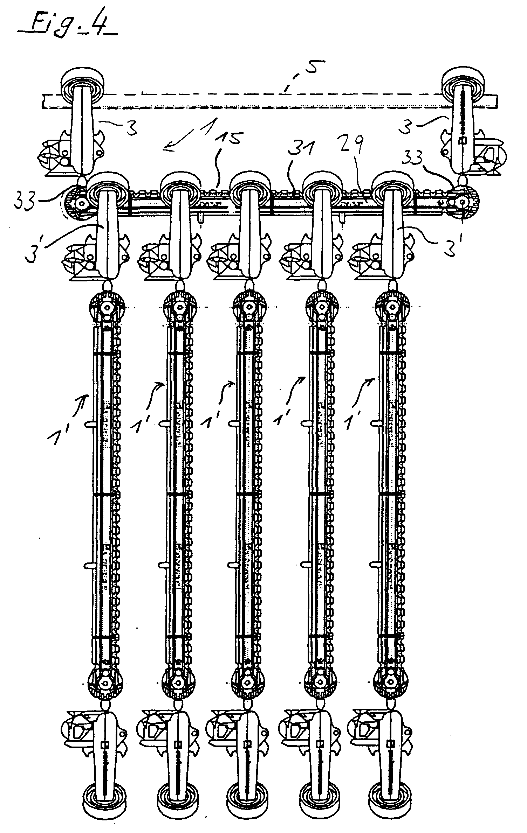

Fig. 4 zeigt ein oberes, mit beiden Rollenlaufwerken 3 an der Schiene 5 hängendes Fördermittel 1 in Förderposition und fünf mit jeweils einem Laufwerk 3' an der Tragstange 15 des oberen Fördermittels 1 angehängte und in Lagerposition vertikal herabhängende Fördermittel 1'. Fig. 4 zeigt somit eine Möglichkeit der - in bezug auf die Schienenlängsrichtung - platzsparenden Bereithaltung von Fördermitteln 1', die bei Bedarf von der Tragstange 15 auf die Laufschiene 5 umgesetzt werden können.

Die Tragstange 15 weist oberhalb der Seitenflächen 29 jeweils eine Schrägfläche 31 zur Abstützung der Laufrollen von Fördermitteln 1' auf, die gemäß Fig. 4 an einer Tragstange 15 angehängt sind. An den endständigen Tragstangenlängenabschnitten 15₁ sind außen an der Lagerschale 21 Anschlagkonturen 33 vorgesehen, die mit Laufrollen eines auf der betreffenden Tragstange 15 nahe der Lagerschale 21 aufsitzenden Rollenlaufwerkes 3' in Eingriff treten können, um das betreffende Laufwerk 3' bei Schrägförderung gegen Abrollen und Herabstürzen von der Tragstange 15 zu sichern.

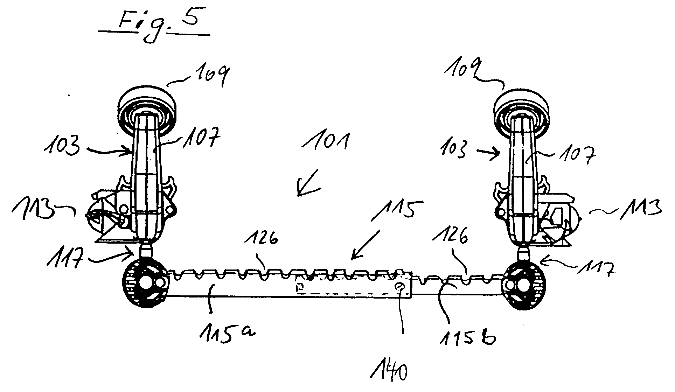

In Fig. 5 ist eine weitere Ausführungsform eines Fördermittels nach der Erfindung dargestellt. Elemente in Fig. 5, die mit Elementen in Fig. 1 korrespondieren, sind mit entsprechend gleicher Bezugszahl zuzüglich 100 gekennzeichnet, so daß zur Erläuterung solcher Elemente auf die Beschreibung des ersten Ausführungsbeispiels verwiesen werden kann. Der wesentliche Unterschied zwischen den Ausführungsbeispielen nach Fig. 1 und Fig. 5 besteht darin, daß die Tragstange 115 des Ausführungsbeispiels nach Fig. 5 aus zwei teleskopisch aneinander geführten Tragstangenlängenabschnitten 115a, 115b zusammengesetzt ist. Zum Zwecke der Längenänderung der Tragstange 115 sind die Tragstangenlängenelemente 115a und 115b auseinanderziehbar bzw. zusammenschiebbar. Eine Justierklemmschraube 140 im Tragstangenlängenabschnitt 115a dient dazu, den Tragstangenlängenabschnitt 115b in der jeweils gewählten Teleskopeinstellung zu fixieren. Das Fördermittel 101 bietet somit die Möglichkeit einer raschen und einfachen Längenänderung der Tragstange 115 und somit des gesamten Fördermittels.

## Patentansprüche

1. Fördermittel für eine Hängefördereinrichtung, welches zwei an einer Schiene (5) hängend bewegbare Rollenlaufwerke (3) und eine die Rollenlaufwerke (3) verbindende Tragstange (15) für zu transportierendes Fördergut aufweist,
dadurch gekennzeichnet,
daß die Tragstange (15) bedarfsweise lösbar aneinander angefügte Längenabschnitte (15₁, 15₂) aufweist.

2. Fördermittel nach Anspruch 1,
dadurch gekennzeichnet,
daß die Längenabschnitte (15₁, 15₂) Kunststoffteile, insbesondere Kunststoff-Hohlteile, sind.

3. Fördermittel nach Anspruch 1 oder 2,
dadurch gekennzeichnet,
daß die Längenabschnitte (15₁, 15₂) Steckverbindungselemente sind.

4. Fördermittel nach einem der vorhergehenden Ansprüche,
dadurch gekennzeichnet,
daß die Längenabschnitte (15₁, 15₂) von einem sich in Tragstangenlängsrichtung erstreckenden Kern zur mechanischen Stabilisierung der Tragstange durchsetzt sind.

5. Fördermittel nach einem der vorhergehenden Ansprüche,
dadurch gekennzeichnet,
daß die Längenabschnitte an denjenigen Enden, an denen sie aneinander angefügt sind, durch Verriegelungsmittel, insbesondere Rastverriegelungsmittel, wahlweise lösbar aneinander fixiert sind.

6. Fördermittel nach einem der vorhergehenden Ansprüche,
dadurch gekennzeichnet,
daß die beiden endständigen Längenabschnitte (15₁) der Tragstange (15) gelenkig mit einem jeweiligen Rollenlaufwerk (3) verbunden sind.

7. Fördermittel nach dem Oberbegriff des Anspruchs 1,
dadurch gekennzeichnet,
daß die Tragstange (115) wahlweise in ihrer Länge verstellbar ist.

8. Fördermittel nach Anspruch 7,
dadurch gekennzeichnet,
daß die Tragstange (115) wenigstens zwei zur Längenverstellung teleskopisch auseinanderziehbare bzw. zusammenschiebbare Tragstangenlängenabschnitte aufweist.

9. Fördermittel nach Anspruch 7,
dadurch gekennzeichnet,
daß die Tragstangenlängenabschnitte in jeder beliebigen Teleskopstellung fixierbar sind.
